# FASCICULE DE BREVET EUROPEEN

(11) **EP 2 069 251 B1**
(45) Date de publication et mention de la délivrance du brevet: **06.07.2016**
(21) Numéro de dépôt: 07823724.5
(22) Date de dépôt: 17.08.2007
(51) Int. Cl.: C03C 17/04, E04F 11/16, E04F 15/08

(54) **ELEMENT VITRE ANTIDERAPANT ET PROCEDE DE FABRICATION D'UN TEL ELEMENT**
RUTSCHFESTES GLASELEMENT UND HERSTELLUNGSVERFAHREN FÜR DASSELBE
ANTISKID WINDOW FEATURE AND METHOD OF MAKING SUCH AN ELEMENT

(30) Priorité: 25.08.2006 DE 102006040007
(43) Date de publication de la demande: 17.06.2009
(73) Titulaire: SAINT-GOBAIN GLASS FRANCE, 92400 Courbevoie (FR)
(72) Inventeur: SCHREIBER, Walter, 52074 Aachen (DE); STADELMANN, Herbert, 52072 Aachen (DE); CARDUCK, Ralph, 52134 Herzogenrath (DE); KLINKERS, Jürgen, 52134 Herzogenrath (DE)
(74) Mandataire: Jamet, Vincent
(86) Numéro de dépôt international: PCT/FR2007/051824
(87) Numéro de publication internationale: WO 2008/023128

(56) Documents cités:
- EP-A- 0 513 707
- EP-A- 1 384 520
- US-A1- 2005 248 951

## Description

L'invention concerne un élément vitré praticable comportant une vitre, qui est pourvue d'un revêtement de surface, ainsi qu'un procédé pour la fabrication d'un tel élément vitré.

Des éléments vitrés praticables sont utilisés par exemple pour des escaliers, des passerelles pour piétons dans des bâtiments ou des dalles de plancher. L'avantage de l'utilisation de ces éléments vitrés est qu'ils sont transparents ou translucides et qu'ils offrent ainsi à l'architecte la possibilité d'une construction légère et ouverte. En plus, les éléments vitrés peuvent être éclairés par l'arrière, de sorte que cet effet est encore renforcé. Etant donné que les vitres sont très lisses, les personnes qui circulent sur les éléments vitrés doivent être protégées contre les accidents et les blessures dus à des glissades. Pour réduire le risque de glissade, on applique des revêtements de surface rugueux sur la surface praticable de l'élément vitré.

Le brevet européen EP 0 513 707 B2 concerne une plaque de verre praticable munie d'un revêtement de surface antidérapant. Le revêtement de surface est une fritte de verre déposée sur la surface du verre et contenant des particules anguleuses cuites. La part des particules anguleuses vaut de 5 à 30 % du revêtement, avec une taille de grain moyenne des particules de 50 µm et une taille de grain maximale de 250 µm. Les particules se composent de préférence de silicates ou d'oxydes métalliques, y compris des mélanges de ceux-ci, et/ou d'oxyde de silicium ou de grains de sable.

La demande de brevet allemand DE 100 03 404 A1 concerne une dalle de sol avec un revêtement de surface en verre ou en céramique avec une couche de support, dans laquelle des particules sphériques de verre ou de céramique sont noyées. Celles-ci sont en partie saillantes hors de la couche de support, l'épaisseur de la couche de support étant supérieure ou égale à une moitié d'un diamètre moyen des particules sphériques. La surface essentiellement lisse et arrondie des particules est censée réduire le risque de blessure et améliorer la possibilité de nettoyage de la dalle de sol. Par ailleurs, elles doivent être particulièrement résistantes à l'usure, parce que les particules ne présentent pas d'arêtes vives ou de rugosités de surface, qui peuvent aisément s'éroder sous une charge.

Une autre dalle munie d'un revêtement de surface antidérapant est connue par le brevet allemand DE 196 29 241 C1. On décrit ici une vitre de recouvrement d'un projecteur encastré dans le sol, munie d'une surface antidérapante, dans laquelle des particules dures de corindon, d'oxyde de zirconium, de carbure de silicium, de nitrure de bore, de diamant ou de poudre de titane sont noyées en guise de matériau abrasif dans une couche de support et en sortent au-delà de sa hauteur moyenne. Une telle surface antidérapante présente l'inconvénient de perdre rapidement ses propriétés antidérapantes en utilisation quotidienne, parce que les particules anguleuses s'usent relativement vite.

Le but de l'invention est de procurer un élément vitré pourvu d'un revêtement antidérapant, qui peut être fabriqué de manière économique et simple et qui présente une durabilité accrue.

Ce but est atteint selon l'invention par les caractéristiques de la revendication 1 en ce qui concerne la dalle de verre et par les caractéristiques de la revendication 20 en ce qui concerne le procédé. Les revendications secondaires respectivement subordonnées aux revendications indépendantes présentent des formes de réalisation avantageuses de l'invention.

Dans la description qui suit, il est inévitable que des caractéristiques de l'élément vitré se mêlent à des caractéristiques du procédé, parce que l'élément vitré ne peut être expliqué en partie qu'en faisant référence au procédé.

L'invention consiste à utiliser de fines particules anguleuses de vitrocéramique. Contrairement aux particules connues de silicates, d'oxydes métalliques, de sable ou de pierre ponce, celles-ci présentent une adhérence nettement accrue aux frittes de verre dans le revêtement de surface. Ceci est dû à l'étroite affinité chimique et physique du matériau vitrocéramique et d'une matrice de verre, il peut ainsi s'établir, pendant la cuisson, une liaison intime de la matière de la fritte de verre d'une part avec la vitre et d'autre part avec les particules, liaison qui empêche essentiellement l'expulsion des particules hors de l'élément vitré pendant son utilisation.

Naturellement, des particules de verre présentent une affinité encore plus grande avec la vitre, comme on en connaît par exemple par le document DE 100 03 404 A1. Celles-ci se fondent cependant au moins en partie dans la matière de la fritte de verre pendant la cuisson et elles sont enrobées par celle-ci, de sorte qu'aussi bien l'effet antidérapant que la résistance à l'expulsion sont réduits. Au contraire, des particules de vitrocéramique ne peuvent pas fondre, en raison de leur point de fusion très élevé d'environ 1100°C, et elles se retrouvent isolées dans le liant composé de la matière de fritte de verre.

Au cas où des particules saillantes hors de la fritte de verre se briseraient, malgré leur haute résistance mécanique, il est apparu de manière surprenante que les particules restantes deviennent de nouveau anguleuses. Une usure mécanique du revêtement de surface n'entraîne ainsi aucune diminution de l'effet antidérapant, au contraire il se produit un phénomène spontané de formation d'arêtes.

La taille des particules de vitrocéramique est de 50 µm à 250 µm, sans descendre en dessous de la valeur de 50 µm si possible, la taille moyenne de grain est de 100 µm. On obtient de très bons résultats lorsque la part pondérale des particules est comprise entre 5 % et 30 %, et cette part est de préférence comprise entre 10 % et 20 %.

Une forme de réalisation avantageuse de l'invention, dans laquelle la durabilité de l'effet antidérapant du revêtement de surface est encore améliorée, consiste à utiliser une fritte de verre qui convient pour une exposition extérieure aux intempéries. De telles frittes de verre possèdent une résistance chimique et mécanique plus élevée que les frittes de verre usuelles. De telles frittes de verre contiennent souvent du bismuth, par exemple de bonnes expériences ont été menées avec des peintures céramiques contenant de telles frittes de verre, des firmes Pemco et Ferro. La fritte de verre ou la pâte céramique contenant la fritte de verre sont chauffées à des températures comprises entre 450°C et 700°C pendant le processus de cuisson, de sorte que celles-ci fondent et, après le refroidissement, servent de liant pour les particules de vitrocéramique restant à l'état d'agrégat solide. Lorsque l'on souhaite une précontrainte ou une précontrainte partielle thermique de la vitre, celle-ci peut avantageusement succéder immédiatement au traitement thermique de la couche de surface. Usuellement, la vitre chauffée est trempée à l'air, de façon à produire les contraintes de traction et de compression nécessaires dans la vitre. Bien entendu, la vitre peut aussi être précontrainte chimiquement si nécessaire.

Le revêtement de surface de l'élément vitré selon l'invention présente au moins une résistance à l'usure du degré d'usure IV, qui est défini dans la norme EN ISO 10545 partie 7. En l'occurrence, le groupe de sollicitation ou l'usure du vernissage de toiles et de plaques vernissées est déterminé par l'essai PEI humide. On produit une usure artificielle au moyen de grains d'oxyde d'aluminium, de billes de sable et addition d'eau dans un système rotatif excentrique. Le nombre de révolutions laissant une image d'usure intacte conduit à la classification reproduite dans le tableau ci-dessous:

| Groupes de sollicitation | Révolutions | Evaluation |
|---|---|---|
| I | 150 | Sollicitation très faible |
| II | 300 - 600 | Sollicitation faible |
| III | 750 - 1500 | Sollicitation moyenne |
| IV | > 1 500 | Sollicitation élevée |
| V | > 12 000 | Sollicitation très élevée |

Des exemples correspondants aux divers groupes de sollicitation sont:
Groupe de sollicitation I:
   revêtements de sol céramiques vernissés, qui sont utilisés avec une faible fréquence de passage, sans la présence de saletés abrasives et avec des chaussures à semelles souples. Exemples: salles de bains, chambres à coucher dans des habitations, sans accès direct vers l'extérieur.
Groupe de sollicitation II:
   revêtements de sol céramiques vernissés, qui sont utilisés avec une faible fréquence de passage et en présence de saletés faiblement abrasives, avec des chaussures normales. Exemples: parties d'habitation autres que la cuisine, le vestibule et autres espaces avec passage fréquent.
Groupe de sollicitation III:
   revêtements de sol céramiques vernissés, qui sont utilisés avec une fréquence de passage moyenne, en présence de saletés faiblement abrasives, avec des chaussures normales. Exemples: toute l'habitation, balcons, loggias, sols, à l'exception de la cuisine; chambres et salles de bains d'hôtels; locaux sanitaires et thérapeutiques dans les hôpitaux.
Groupe de sollicitation IV:
   revêtements de sol céramiques vernissés, qui sont utilisés avec une grande fréquence de passage, avec des chaussures normales et avec une fréquence d'encrassement et de sollicitation élevée. Exemples: cuisines, entrées, terrasses, espaces de vente et de commerce, bureaux, bâtiments administratifs, hôpitaux, e. a.
Groupe de sollicitation V:
   revêtements de sol céramiques vernissés, qui sont utilisés avec une grande fréquence de passage et soumis à une forte usure. Exemple: magasins, lieux de restauration, boulangeries, snack-bars, halls d'entrée d'hôtels et de banques, zones de comptoirs et de guichets.

L'élément vitré selon l'invention présente à l'état humide, par exemple mouillé à l'eau, un coefficient de frottement d'au moins 0,4, de préférence un coefficient de frottement supérieur à 1,8.

Le revêtement de surface peut être incolore ou être coloré, de façon translucide ou opaque, en différentes couleurs. Les effets de coloration peuvent être obtenus par des frittes de verre colorées ou par des pigments ajoutés au revêtement de surface ou à la pâte céramique.

La couche déposée couvrira usuellement la totalité de la surface utile, donc de la surface praticable de l'élément vitré, parce qu'un tel revêtement continu est relativement facile à réaliser. Le revêtement de surface peut cependant aussi être déposé selon des motifs déterminés, réguliers ou irréguliers, ce qui permet d'obtenir des effets esthétiques particuliers. Les motifs peuvent aussi être constitués de revêtements de surface de couleurs différentes.

L'élément vitré peut être une vitre monolithique, qui est alors de préférence précontrainte, il est cependant également possible de fabriquer une vitre composite à partir de l'élément vitré et d'autres plaques de verre ou de plastique ou de plaques d'autres matériaux, par exemple d'acier ou de céramique. Les plaques individuelles sont alors assemblées les unes aux autres à l'aide de couches d'adhésif, par exemple sous forme de films thermoplastiques ou de liquides durcissables, la face utile pourvue du revêtement de surface étant naturellement tournée vers l'extérieur. Comme couches d'adhésif, les films de polyvinyle butyral se sont avérés intéressants.

Les particules de vitrocéramique sont de préférence obtenues à partir de matériau vitrocéramique recyclé, par exemple à partir de plaques de cuisson vitrocéramiques défectueuses, qui sont finement broyées en particules de vitrocéramique, après enlèvement de tous les accessoires, et réutilisées dans le revêtement de surface selon l'invention.

Il convient de signaler ici que la liaison des particules de vitrocéramique est certes réalisée au moyen d'un matériau de fritte de verre. Il est certes possible, bien qu'inhabituel, de déposer la fritte de verre et les particules de vitrocéramique comme telles, donc sous forme pure par exemple en une poudre finement moulue, sur le substrat et ensuite de les fondre et de les cuire. Un telle technique de fabrication serait cependant très difficile à maîtriser. Usuellement, on utilise une pâte céramique qui, en plus de la fritte de verre comme matériau de liaison proprement dit, contient encore un fluide liquide ainsi que d'éventuelles autres substances d'addition. La pâte céramique a une consistance liquide à visqueuse et elle peut être appliquée sur la vitre au moyen de différents procédés, comme par exemple des procédés d'impression, de projection ou d'immersion. Les particules de vitrocéramique peuvent soit être déjà mélangées à la pâte céramique, soit être déposées séparément sur la pâte céramique déjà appliquée sur la vitre et encore humide.

Pour la fabrication de l'élément vitré selon l'invention, on dépose sur la vitre un revêtement de surface présentant un rapport de mélange de 5 à 30 % de particules de vitrocéramique anguleuses avec 95 à 70 % de matériau de fritte de verre, et on le cuit. De préférence, pour améliorer la mise en oeuvre du matériau de revêtement, la fritte de verre ou aussi la fritte de verre avec les particules de vitrocéramique anguleuses est mélangée avec un fluide en une pâte visqueuse ou en un liquide. La pâte visqueuse peut être en particulier appliquée par un procédé de sérigraphie, le liquide convient au contraire pour être mis en oeuvre par un procédé par immersion ou par projection.

Lorsque la vitre est d'abord pourvue exclusivement de la fritte de verre, les particules de vitrocéramique doivent encore être ajoutées par la suite. Ceci est possible de façon particulièrement simple par épandage sur la fritte de verre encore humide.

On préfère cependant un procédé de dépôt, qui ne requiert qu'une seule étape, dans lequel les particules de vitrocéramique et la fritte de verre sont mélangées avec un fluide et sont ensuite déposées ensemble sur la vitre.

## Revendications

1. Elément vitré praticable comportant une vitre et un revêtement de surface déposé sur la vitre, qui se compose d'une fritte de verre cuite contenant des particules anguleuses, dans lequel la part pondérale des particules anguleuses vaut de 5 % à 30 % et les particules présentent une taille comprise entre 50 µm et 250 µm avec une taille de grain moyenne de 100 µm, **caractérisé en ce que** les particules anguleuses se composent de vitrocéramique.

2. Elément vitré selon la revendication 1, **caractérisé en ce que** la fritte de verre convient pour les intempéries extérieures.

3. Elément vitré selon la revendication 1 ou 2, **caractérisé en ce que** la fritte de verre est une fritte de verre à base de bismuth.

4. Elément vitré selon l'une quelconque des revendications précédentes, **caractérisé en ce que** le revêtement de surface présente une résistance à l'usure minimale du degré d'usure 4 selon la norme EN ISO 10545-7.

5. Elément vitré selon l'une quelconque des revendications précédentes, **caractérisé en ce que** la part des particules anguleuses dans le revêtement est comprise entre 10 % et 20 %.

6. Elément vitré selon l'une quelconque des revendications précédentes, **caractérisé en ce que** le revêtement de surface présente un coefficient de frottement supérieur à 0,4.

7. Elément vitré selon l'une quelconque des revendications précédentes, **caractérisé en ce que** le revêtement de surface présente un coefficient de frottement supérieur à 1,8.

8. Elément vitré selon l'une quelconque des revendications précédentes, **caractérisé en ce que** le revêtement de surface est translucide.

9. Elément vitré selon l'une quelconque des revendications précédentes, **caractérisé en ce que** le revêtement de surface contient des pigments colorés.

10. Elément vitré selon l'une quelconque des revendications précédentes, **caractérisé en ce que** la fritte de verre est colorée.

11. Elément vitré selon l'une quelconque des revendications précédentes, **caractérisé en ce que** le revêtement de surface couvre la vitre essentiellement sur toute la surface d'une de ses faces principales.

12. Elément vitré selon l'une quelconque des revendications 1 à 10, **caractérisé en ce que** le revêtement de surface ne couvre la vitre que par zones sur une de ses faces principales.

13. Elément vitré selon la revendication 12, **caractérisé en ce que** le revêtement de surface forme un motif prédéterminé sur une des faces principales de la vitre.

14. Elément vitré selon l'une quelconque des revendications précédentes, **caractérisé en ce qu'**il est constitué d'une vitre monolithique.

15. Elément vitré selon la revendication 14, **caractérisé en ce que** la vitre est précontrainte ou partiellement précontrainte par voie thermique ou chimique.

16. Elément vitré selon l'une quelconque des revendications 1 à 13, **caractérisé en ce qu'**il est constitué d'une vitre composite composée de plusieurs vitres de verre et/ou de plastique assemblées les unes aux autres au moyen d'une couche d'adhésif, le revêtement de surface de la vitre étant tourné vers l'extérieur.

17. Elément vitré selon la revendication 16, **caractérisé en ce que** la couche d'adhésif est un film thermoplastique en polyvinyle butyral.

18. Elément vitré selon l'une quelconque des revendications précédentes, **caractérisé en ce que** les particules de vitrocéramique anguleuses se composent de particules de vitrocéramique recyclées.

19. Procédé de fabrication d'un élément vitré comportant un revêtement de surface, dans lequel 95 à 70 % de parties en poids de matériau de fritte de verre et 5 à 30 % de parties en poids de particules anguleuses avec une taille comprise entre 50 µm et 250 µm pour une taille de grain moyenne de 100 µm sont mélangées l'une à l'autre et ensuite déposées sur la surface de verre et cuites, **caractérisé en ce que** les particules se composent de vitrocéramique.

20. Procédé selon la revendication 19, **caractérisé en ce que** le mélange du matériau de fritte de verre et des particules anguleuses en vitrocéramique forme avec un fluide une encre céramique, qui est déposée sur la vitre sous forme de revêtement de surface.

21. Procédé de fabrication d'un élément vitré comportant un revêtement de surface, dans lequel le revêtement de surface contient 95 à 70 % de parties en poids de matériau de fritte de verre et 5 à 30 % de parties en poids de particules anguleuses avec une taille comprise entre 50 µm et 250 µm pour une taille de grain moyenne de 100 µm, le matériau de fritte de verre est mélangé avec un fluide et éventuellement d'autres substances d'addition et appliqué sur la vitre sous forme de pâte céramique, **caractérisé en ce que** les particules sont composées de vitrocéramique et sont déposées sur la pâte céramique après l'application de celle-ci et sont ensuite cuites ensemble.

22. Procédé selon l'une quelconque des revendications 19 à 21, **caractérisé en ce que** l'on utilise une fritte de verre convenant pour les intempéries extérieures.

23. Procédé selon la revendication 22, **caractérisé en ce que** l'on utilise une fritte de verre à base de bismuth.

24. Procédé selon l'une quelconque des revendications 19 à 23, **caractérisé en ce que** la pâte céramique ou le mélange de pâte céramique et de particules de vitrocéramique est appliqué sur la vitre au moyen d'un procédé d'impression, en particulier du procédé de sérigraphie, d'un procédé d'immersion ou d'un procédé de projection.

## Patentansprüche

1. Begehbares Glaselement mit einer Glasscheibe und mit einer auf der Glasscheibe aufgebrachten Oberflächenbeschichtung, welche aus einer scharfkantige Partikel enthaltenden eingebrannten Glasfritte besteht, wobei der Gewichtsanteil der scharfkantigen Partikel 5 % bis 30 % beträgt und die Partikel eine Größe zwischen 50 µm und 250 µm bei einer mittleren Korngröße von 100 µm aufweisen, **dadurch gekennzeichnet, dass** die scharfkantigen Partikel aus Glaskeramik bestehen.

2. Glaselement nach Anspruch 1, **dadurch gekennzeichnet, dass** die Glasfritte für die Außenbewitterung geeignet ist.

3. Glaselement nach Anspruch 1 oder 2, **dadurch gekennzeichnet, dass** die Glasfritte eine auf Bismut basierende Glasfritte ist.

4. Glaselement nach einem der vorangehenden Ansprüche, **dadurch gekennzeichnet, dass** die Oberflächenbeschichtung eine Mindest-Abriebfestigkeit der Verschleißstufe 4 nach der Norm EN ISO 10545-7 aufweist.

5. Glaselement nach einem der vorangehenden Ansprüche, **dadurch gekennzeichnet, dass** der Anteil der scharfkantigen Partikel an der Beschichtung zwischen 10 % und 20 % beträgt.

6. Glaselement nach einem der vorangehenden Ansprüche, **dadurch gekennzeichnet, dass** die Oberflächenbeschichtung einen Reibungskoeffizienten größer als 0,4 aufweist.

7. Glaselement nach einem der vorangehenden Ansprüche, **dadurch gekennzeichnet, dass** die Oberflächenbeschichtung einen Reibungskoeffizienten größer als 1,8 aufweist.

8. Glaselement nach einem der vorangehenden Ansprüche, **dadurch gekennzeichnet, dass** die Oberflächenbeschichtung transluzent ist.

9. Glaselement nach einem der vorangehenden Ansprüche, **dadurch gekennzeichnet, dass** die Oberflächenbeschichtung Farbpigmente enthält.

10. Glasefement nach einem der vorangehenden Ansprüche, **dadurch gekennzeichnet, dass** die Glasfritte eingefärbt ist.

11. Glaselement nach einem der vorangehenden Ansprüche, **dadurch gekennzeichnet, dass** die Oberflächenbeschichtung die Glasscheibe auf einer ihrer Hauptflächen im Wesentlichen ganzflächig bedeckt.

12. Glaselement nach einem der Ansprüche bis 10, **dadurch gekennzeichnet, dass** die Oberflächenbeschichtung die Glasscheibe auf einer ihrer Hauptflächen nur bereichsweise bedeckt.

13. Glaselement nach Anspruch 12, **dadurch gekennzeichnet, dass** die Oberflächenbeschichtung auf einer der Hauptflächen der Glasscheibe ein vorbestimmtes Muster bildet.

14. Glaselement nach einem der vorangehenden Ansprüche, **dadurch gekennzeichnet, dass** es aus einer monolithischen Glasscheibe besteht.

15. Glaselement nach Anspruch 14, **dadurch gekennzeichnet, dass** die Glasscheibe thermisch oder chemisch vorgespannt oder teilvorgespannt ist.

16. Glaselement nach einem der Ansprüche 1 bis 13, **dadurch gekennzeichnet, dass** es aus einer Verbundscheibe aus mehreren mittels einer Klebeschicht miteinander verbundenen Glas- und/oder Kunststoffscheiben besteht, wobei die Oberflächenbeschichtung der Glasscheibe nach außen weist.

17. Glaselement nach Anspruch 16, **dadurch gekennzeichnet, dass** die Klebeschicht eine thermoplastische Folie aus Polyvinylbutyral ist.

18. Glaselement nach einem der vorangehenden Ansprüche, **dadurch gekennzeichnet, dass** die scharfkantigen Glaskeramik-Partikel aus recycelten Glaskeramikteilen bestehen.

19. Verfahren zur Herstellung eines Glaselements mit einer Oberflächenbeschichtung, wobei 95 bis 70% Gewichtsteile Glasfrittenmaterial mit 5 bis 30% Gewichtsteilen scharfkantiger Partikel mit einer Größe zwischen 50 µm und 250 µm bei einer mittleren Korngröße von 100 µm miteinander vermischt und anschließend auf die Glasoberfläche aufgetragen und eingebrannt werden, **dadurch gekennzeichnet, dass** die Partikel aus Glaskeramik bestehen.

20. Verfahren nach Anspruch 19, **dadurch gekennzeichnet, dass** die Mischung aus Glasfrittenmaterial und scharfkantigen Partikel aus Glaskeramik zusammen mit einem Medium eine Keramikfarbe bilden, welche als Oberflächenbeschichtung auf die Glasscheibe aufgebracht wird.

21. Verfahren zur Herstellung eines Glaselements mit einer Oberflächenbeschichtung, wobei die Oberflächenbeschichtung 95 bis 70% Gewichtsteile Glasfrittenmaterial und 5 bis 30% Gewichtsteile scharfkantiger Partikel mit einer Größe zwischen 50 µm und 250 µm bei einer mittleren Korngröße von 100 µm enthält, das Glasfrittenmaterial mit einem Medium und eventuell weiteren Zusatzstoffen vermischt als Keramikpaste auf die Glasscheibe aufgetragen wird, **dadurch gekennzeichnet, dass** die Partikel aus Glaskeramik aus bestehen und nach dem Auftragen der Keramikpaste auf diese aufgebracht und anschließend gemeinsam eingebrannt werden.

22. Verfahren nach einem der Ansprüche 19 bis 21, **dadurch gekennzeichnet, dass** eine für eine Außenbewitterung geeignete Glasfritte verwendet wird.

23. Verfahren nach Anspruch 22, **dadurch gekennzeichnet, dass** eine auf Bismut basierende Glasfritte verwendet wird.

24. Verfahren nach einem der Ansprüche 19 bis 23, **dadurch gekennzeichnet, dass** die Keramikpaste oder die Mischung auch Keramikpaste und Glaskeramik-Partikel mittels eines Druckverfahrens, insbesondere des Siebdruckverfahrens, eines Tauch- oder eines Sprühverfahrens auf die Glasscheibe aufgebracht wird.

## Claims

1. A practicable glazed element comprising a glass pane and a surface coating deposited on the pane, which coating is composed of a fired glass frit containing angular particles, in which the weight content of the angular particles ranges from 5% to 30% and the particles have a size between 50 µm and 250 µm with an average particle size of 100 µm, **characterized in that** the angular particles are made of a glass-ceramic.

2. The glazed element as claimed in claim 1, **characterized in that** the glass frit is suitable for foul weather.

3. The glazed element as claimed in claim 1 or 2, **characterized in that** the glass frit is a bismuth-based glass frit.

4. The glazed element as claimed in any one of the preceding claims, **characterized in that** the surface coating has a minimum wear resistance of degree of wear 4 according to standard EN ISO 10545-7.

5. The glazed element as claimed in any one of the preceding claims, **characterized in that** the content of angular particles in the coating is between 10% and 20%.

6. The glazed element as claimed in any one of the preceding claims, **characterized in that** the surface coating has a friction coefficient of greater than 0.4.

7. The glazed element as claimed in any one of the preceding claims, **characterized in that** the surface coating has a friction coefficient of greater than 1.8.

8. The glazed element as claimed in any one of the preceding claims, **characterized in that** the surface coating is translucent.

9. The glazed element as claimed in any one of the preceding claims, **characterized in that** the surface coating contains colored pigments.

10. The glazed element as claimed in any one of the preceding claims, **characterized in that** the glass frit is colored.

11. The glazed element as claimed in any one of the preceding claims, **characterized in that** the surface coating covers the pane essentially over the entire surface of one of its main faces.

12. The glazed element as claimed in any one of claims 1 to 10, **characterized in that** the surface coating covers the glass pane only areas on one of its main faces.

13. The glazed element as claimed in claim 12, **characterized in that** the surface coating forms a predetermined pattern on one of the main faces of the pane.

14. The glazed element as claimed in any one of the preceding claims, **characterized in that** it consists of a monolithic glass pane.

15. The glazed element as claimed in claim 14, **characterized in that** the glass pane is prestressed or partially prestressed, thermally or chemically.

16. The glazed element as claimed in any one of claims 1 to 13, **characterized in that** it consists of a composite pane made up of a plurality of glass and/or plastic panes assembled together by means of a layer of adhesive, the surface coating of the pane being turned toward the outside.

17. The glazed element as claimed in claim 16, **characterized in that** the layer of adhesive is a polyvinyl butyral thermoplastic film.

18. The glazed element as claimed in any one of the preceding claims, **characterized in that** the angular glass-ceramic particles consist of recycled glass-ceramic particles.

19. A process for manufacturing a glazed element having a surface coating, in which 95 to 70% by weight of a frit material and 5 to 30% by weight of angular particles, with a size between 50 µm and 250 µm for a mean particle size of 100 µm, are mixed together and then deposited on the surface and fired, **characterized in that** the particles consist of a glass-ceramic.

20. The process as claimed in claim 19, **characterized in that** the mixture of the glass frit material and the angular glass-ceramic particles, together with a fluid, forms a ceramic ink that is deposited on the glass pane in the form of a surface coating.

21. A process for manufacturing a glazed element having a surface coating, in which the surface coating contains 95 to 70% by weight of glass frit material and 5 to 30% by weight of angular particles, with a size between 50 µm and 250 µm for a mean particle size of 100 µm, and the glass frit material is mixed with a fluid and optionally with other additives and applied to the glass pane in the form of a ceramic paste, **characterized in that** the particles consist of a glass-ceramic and are deposited on the ceramic paste after said paste has been applied, and are then fired together.

22. The process as claimed in any one of claims 19 to 21, **characterized in that** a glass frit suitable for foul weather is used.

23. The process as claimed in claim 22, **characterized in that** a bismuth-based glass frit is used.

24. The process as claimed in any one of claims 19 to 23, **characterized in that** the ceramic paste or the mixture of ceramic paste and glass-ceramic particles is applied to the glass pane by means of a printing process, in particular a screen printing process, a dipping process or a spraying process.
